# EUROPÄISCHE PATENTSCHRIFT

(11) **EP 4 078 393 B1**
(45) Veröffentlichungstag und Bekanntmachung des Hinweises auf die Patenterteilung: **10.01.2024**
(21) Anmeldenummer: 20824458.2
(22) Anmeldetag: 20.11.2020
(51) Int. Cl.: G06F 16/22, G06F 16/27

(54) **VERFAHREN UND ZUGEHÖRIGES COMPUTERSYSTEM ZUM ERZEUGEN VON DATEN EINER DATENSTRUKTUR**
METHOD AND COMPUTER SYSTEM FOR GENERATING DATA OF A DATA STRUCTURE
METHODE ET SYSTEME CALCULATEUR POUR GENERER DES DONNEES D'UNE STRUCTURE DE DONNEES

(30) Priorität: 20.11.2019 EP 19210488
(43) Veröffentlichungstag der Anmeldung: 26.10.2022
(73) Patentinhaber: Akarion AG, 81675 München (DE)
(72) Erfinder: MASCHEK, Sascha, 4040 Linz (AT); EMATHINGER, Paul, 4020 Linz (AT)
(74) Vertreter: Gruner, Leopold Joachim
(86) Internationale Anmeldenummer: PCT/EP2020/082994
(87) Internationale Veröffentlichungsnummer: WO 2021/099627

(56) Entgegenhaltungen:
- CN-A- 109 493 044
- US-A1- 2019 305 937

## Beschreibung

### Gebiet der Erfindung

Die vorliegende Erfindung bezieht sich im Allgemeinen auf mehrere zueinander in einem Wechselwirkungsverhältnis stehende Verfahren und entsprechende computerbasierte Vorrichtungen. Die Erfindung bezieht sich dabei insbesondere auf ein Verfahren zum Erzeugen von Daten innerhalb einer Datenstruktur, die in einem Medium oder System gespeichert oder gesichert werden können, ein Verfahren zum Löschen eines Datenelements aus einer Datenstruktur, ein Verfahren zum Verifizieren von Daten innerhalb einer Datenstruktur und ein Verfahren zum systematischen Erhalt der Integrität einer Datenstruktur. Die Erfindung bezieht sich auch auf computerbasierte Vorrichtungen, welche diese Verfahren bzw. die einzelnen Verfahrensschritte darin ausführen bzw. zum Einsatz bringen. Die Erfindung wird durch die anhängenden Ansprüche definiert.

### Technischer Hintergrund

Die vorliegende Erfindung bezieht sich auf das technische Gebiet der Datenverarbeitung. Auf diesem technischen Gebiet der Datenverarbeitung sind verschiedene Techniken aus dem Stand der Technik bekannt.

Aus dem Stand der Technik ist eine Technik bekannt, bei der aus Daten ein sogenannter Streuwert (Hash oder Hashwert) berechnet wird. Regelmäßig kommt dabei eine sogenannte Streuwertfunktion (Hashfunktion) zum Einsatz. Eine solche Hashfunktion wird im Stand der Technik beispielsweise durch den sicheren Hash-Algorithmus (SHA, secure hash algorithm) bereitgestellt. Mit einer Hashfunktion kann häufig ein in seiner Größe nicht notwendigerweise beschränkter Datenblock auf einen Datenblock fester Größe, den Hash oder Hashwert, abgebildet werden. Eine typische Länge für einen Hash ist beispielsweise 256 bit. Eine wünschenswerte Eigenschaft einer guten kryptologischen Hashfunktion ist eine näherungsweise Injektivität und eine dadurch erzielte näherungsweise Kollisionsresistenz. Die "ideale Hashfunktion" ist daher vollständig linkseindeutig und kollisionsfrei und bildet unterschiedliche Eingangsdaten immer auf unterschiedliche Hashes ab.

In einem typischen Anwendungsfall für eine Hashfunktion wird ein Hashwert für eine größere Datenmenge berechnet. Beispielsweise soll eine größere Datenmenge über ein möglicherweise nicht sicheres Übertragungsmedium, wie das Internet, übertragen werden. Zum Beispiel kann durch einen technischen Fehler ein Teil der Daten falsch übertragen werden oder ein Dritter manipuliert diese Daten.

Wenn der Sender der Daten ihren Hashwert berechnet und diesen Hashwert dem Empfänger zur Verfügung stellt, kann der Empfänger die Echtheit und Unverfälschtheit der Daten verifizieren, vorausgesetzt der Hashwert selbst ist echt und verlässlich.

Das Verfahren bringt jedoch den Nachteil mit sich, dass das Verfahren völlig außer Kraft gesetzt wird, wenn der Hashwert selbst manipuliert wird. In einem Beispiel überträgt ein Benutzer A (z. B. Alice) an einen Benutzer B (z. B. Bob) eine Datei und außerdem den Hashwert der Datei. Ein Angreifer E (z. B. Eve) fängt diese Kommunikation ab und ersetzt die Datei durch eine gefälschte Datei. Die gefälschte Datei enthält gefälschte Daten. Außerdem ersetzt E den Hashwert der Datei durch den Hashwert der gefälschten Datei. Wenn B nun die Daten empfängt und überprüft, indem er die Hashfunktion der Datei selbst berechnet und mit dem Hashwert vergleicht, kommt er zu dem Schluss, dass die Daten nicht manipuliert wurden. So hat E erfolgreich die Daten manipuliert, ohne dass dies von B festgestellt wurde.

Zudem ist ein anderes Verfahren als sogenannte Blockverkettung (block chain) bekannt. Eine Blockverkettung besteht aus Daten, welche in Form von aneinandergereihten Datenblöcken organisiert sind. Einer Blockverkettung kann so bei Bedarf ein weiterer Datenblock am Ende der Blockverkettung angefügt werden. Dabei wird ein Hashwert des vorhergehenden Blocks, zusätzlich zu eventuellen Nutzdaten, in jedem neuen Block gespeichert.

Wird ein Block innerhalb der Blockverkettung durch einen Angreifer manipuliert, wird die Verkettung inkonsistent. Für eine erfolgreiche Manipulation muss durch den Angreifer daher ein gewisser Teil der Kette neu berechnet werden. Die Blockverkettung stellt so eine hohe Datenintegrität der auf ihr gespeicherten Daten zur Verfügung.

Blockverkettungen haben verschiedene Anwendungsbereiche. Im Bereich der virtuellen Währungen können Blockverkettungen eingesetzt werden, beispielsweise bei der Währung Bitcoin. Bei Bitcoin besteht eine Blockverkettung aus einer Reihe von Datenblöcken, in denen jeweils eine oder mehrere Transaktionen zusammengefasst und mit einer Prüfsumme versehen sind, d. h., sie werden jeweils paarweise zu einem Hash-Baum zusammengefasst.

Der Stand der Technik für Blockverkettung hat jedoch den Nachteil, dass er schlecht skalierbar ist. Da Blockverkettungen kommunikations- und rechenintensiv sind, weil alle "Knoten", die an der Blockverkettung beteiligt sind, untereinander abgeglichen werden müssen, können nach derzeitigem Stand nur sehr wenige Transaktionen (d.h. Einträge in eine Blockverkettung) pro Sekunde weltweit durchgeführt werden. Allerdings besteht ein wachsender Bedarf an Speicherplatz und anderen Ressourcen wie Bandbreite.

Zu Zwecken der Transparenz, sind Blockverkettungen häufig öffentlich zugänglich, wodurch sie überprüfbar werden, aber auch für andere einsehbar sind. Das hat den Nachteil, dass vertrauliche Daten nicht in die Kette eingebracht werden können, oder die Kenntnisnahme der Daten durch Dritte in Kauf genommen werden muss.

Ein weiterer Nachteil besteht in der geringen Flexibilität der Verkettung. Häufig werden Daten nur für einen gewissen Zeitraum benötigt, und sind danach überflüssig, sollen anonymisiert oder pseudonymisiert werden (oder sollen sogar ganz gelöscht werden, z.B. um gesetzliche Vorgaben z. B. im Datenschutz zu erfüllen). Sind diese Daten aber nun in die Blockverkettung eingebracht, sind sie fester Teil der Kette, belegen Ressourcen, und können nicht problemlos entfernt oder geändert werden, ohne die Verkettung dabei zu zerstören. Zudem ist die redundante Speicherung von Daten, die aufgrund der Geheimhaltung und dem damit verbundenen Erfordernis der Unveränderbarkeit von Daten erforderlich ist, sehr kostenintensiv, wobei schon für die Speicherung von geringen Datenmengen enorme Kosten entstehen können.

Aus dem chinesischen Dokument CN109493044A1 ist ein Verfahren bekannt, um den aktuellen/letzten Block aus einer Blockchain zu löschen. Dabei wird unterschieden, ob ein User ein Superuser ist, d.h. Superuser-Zugriffsrechte, besitzt oder nicht.

Aus dem US-Dokument US2019/0305937 ist ein Dokument bekannt, welches in Bestandteile zerlegt wird, wonach ein Merkle-Tree errichtet wird. Die Wurzel des Merkle-Tree kann in einer Blockchain gespeichert werden.

Der vorliegenden Erfindung liegt daher die technische Aufgabe zugrunde, Verfahren bereitzustellen, die die Nachteile des Standes der Technik überwinden und neue Lösungen ermöglichen. Insbesondere werden flexiblere, skalierbare, sicherere, datenschutzkonformere, verlässlichere Lösungen benötigt. Auch der Faktor der Kostenminimierung spielt eine wesentliche Rolle. Die Erfindung wird durch die anliegenden Ansprüche definiert.

### Figurenliste

Die vorliegende Erfindung wird nachfolgend anhand der in den schematischen Figuren der Zeichnungen angegebenen Ausführungsbeispiele näher erläutert. Es zeigen dabei:
Fig. 1a, Fig. 1b schematische Darstellungen von Berechnungen von Streu- oder Hashwerten aus Daten unter Anwendung einer Streuwert- oder Hashfunktion;
Fig. 2a schematische Darstellungen von Blockverkettungen;
Fig. 2b eine schematische Darstellung von zwei aufeinander folgenden Blöcken innerhalb einer Blockverkettung;
Fig. 3 eine schematische Darstellung einer Datenstruktur und eines Mediums oder Systems, welches die Integrität der auf ihm gespeicherten Daten algorithmisch und/oder mathematisch absichert, gemäß einer Ausführungsform der vorliegenden Erfindung;
Fig. 4 eine schematische Darstellung einer Datenstruktur und eines Mediums oder Systems, welches die Integrität der auf ihm gespeicherten Daten algorithmisch und/oder mathematisch absichert, gemäß einer Ausführungsform der vorliegenden Erfindung;
Fig. 5 eine schematische Darstellung eines Datenblocks für eine Blockverkettung zur Anwendung im Zusammenhang mit der vorliegenden Erfindung;
Fig. 6 eine schematische Darstellung eines Hashbaumes oder Merkle-Trees zur Anwendung im Zusammenhang mit der vorliegenden Erfindung;
Fig. 7a, Fig. 7b weitere schematische Darstellungen von Hashbäumen oder Merkle-Trees zur Anwendung im Zusammenhang mit der vorliegenden Erfindung im Rahmen konkreter Beispiele;
Fig. 8 eine weitere schematische Darstellung eines Hashbaumes oder Merkle-Trees zur Anwendung im Zusammenhang mit der vorliegenden Erfindung im Rahmen eines konkreten Beispiels mit Seeds/Salts;
Fig. 9 eine schematische Darstellung eines Hashbaumes oder Merkle-Trees und einer Blockverkettung zur Anwendung im Zusammenhang mit der vorliegenden Erfindung;
Fig. 10 eine schematische Darstellung eines Hashbaumes oder Merkle-Trees und einer Blockverkettung mit zusätzlicher Verkettung zur Anwendung im Zusammenhang mit der vorliegenden Erfindung;
Fig. 11, Fig. 12 schematische Darstellungen einer Datenstruktur zur Anwendung im Zusammenhang mit der vorliegenden Erfindung;
Fig. 13, Fig. 14, Fig. 15 schematische Darstellungen einer Datenstruktur im Zusammenhang mit einem Verfahren zum Löschen eines Datenelements;
Fig. 16 eine schematische Darstellung einer Datenstruktur, eines Mediums oder Systems, welches die Integrität der auf ihm gespeicherten Daten algorithmisch und/oder mathematisch absichert, und eines Anwenders gemäß einer Ausführungsform der vorliegenden Erfindung im Zusammenhang mit einem Verfahren zum Verifizieren von Daten innerhalb einer Datenstruktur;
Fig. 17 eine schematische Darstellung einer Datenstruktur, eines Mediums oder Systems, welches die Integrität der auf ihm gespeicherten Daten algorithmisch und/oder mathematisch absichert, und eines Anwenders gemäß einer Ausführungsform der vorliegenden Erfindung im Zusammenhang mit einem Verfahren zum Verifizieren von Daten innerhalb einer Datenstruktur, nachdem ein Datenelement bereits aus der Datenstruktur gelöscht wurde;
Fig. 18, Fig. 19, Fig. 20 schematische Darstellungen eines zeitlichen Verlaufs gemäß einer Ausführungsform der vorliegenden Erfindung, insbesondere im Hinblick auf ein Speichern oder Sichern von Daten und den systematischen Erhalt der Integrität der Daten einer Datenstruktur.

In allen Figuren sind gleiche bzw. funktionsgleiche Elemente und Vorrichtungen - sofern nichts anderes angegeben ist - mit denselben Bezugszeichen versehen worden.

### Beschreibung der Zeichnungen

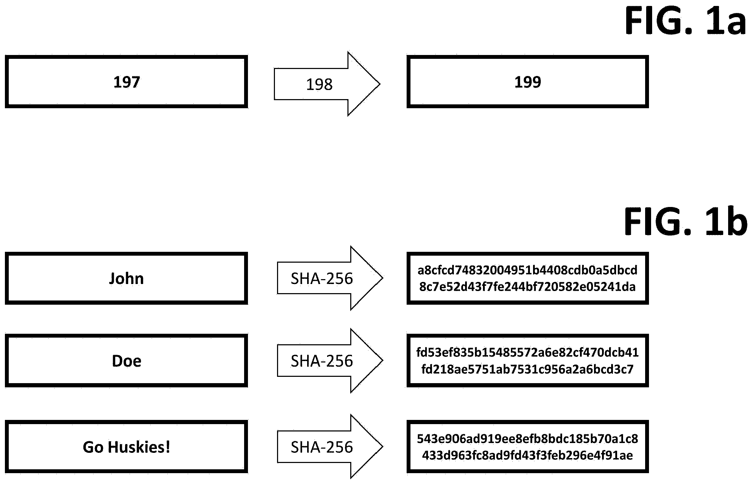

Die Fig. 1a zeigt eine schematische Darstellung einer Berechnung eines Streu- oder Hashwertes aus Daten unter Anwendung einer Streuwert- oder Hashfunktion. Dabei wird die Hashfunktion auf die Daten angewandt. In diesem konkreten Beispiel wird eine Hashfunktion 198 auf ein Datenelement 197 angewandt. Dabei entsteht, als Ergebnis, der Hashwert 199. Weitere konkrete Ausgestaltungen werden beispielsweise im Zusammenhang mit der Figur 1b beschrieben.

Die Fig. 1b zeigt schematische Darstellungen von Berechnungen von Streu- oder Hashwerten aus Daten unter Anwendung einer Streuwert- oder Hashfunktion. Als Hashfunktion kommt in diesem Beispiel der sichere Hash-Algorithmus (SHA, secure hash algorithm) zum Einsatz. Konkret kommt dieser Algorithmus in der Form SHA-256 zum Einsatz. Bei dieser Einsatzform hat der berechnete Hashwert eine feste Länge von 256 bit. In einem ersten Beispiel wird aus dem Datenelement "John" mittels SHA-256 der Hashwert a8cfcd74832004951b4408cdb0a5dbcd8c7e52d43f7fe244bf720582e05241da berechnet. In einem zweiten Beispiel wird aus dem Datenelement "Doe" mittels SHA-256 der Hashwert fd53ef835b15485572a6e82cf470dcb41fd218ae5751ab7531c956a2a6bcd3c7 berechnet. In einem dritten Beispiel wird aus dem Datenelement "Go Huskies!" mittels SHA-256 der Hashwert 543e906ad91gee8efb8bdc185b70a1c8433d963fc8ad9fd43f3feb296e4f91ae berechnet. Hashfunktionen können auch von SHA verschieden sein.

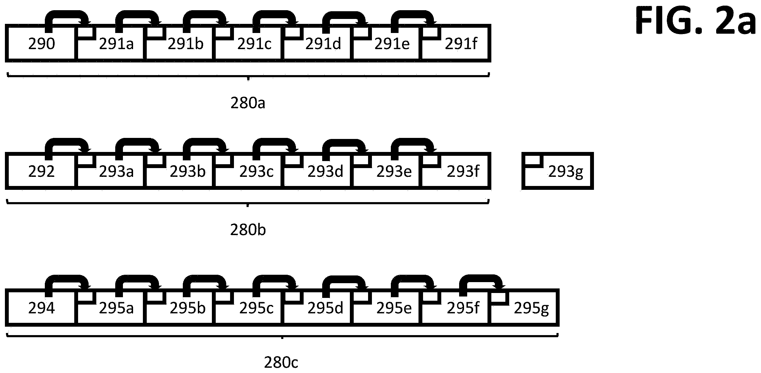

Die Fig. 2a zeigt schematische Darstellungen von Blockverkettungen 280a-c.

Die Blockverkettung 280a hat in der Regel einen Startblock 290, welcher in der Regel als "Block 0" nummeriert wird, aber keineswegs muss. Auf den Startblock folgen weitere sukzessive Blöcke 291a-f. Sämtliche Blöcke der Blockverkettung 280a können Nutzdaten enthalten, müssen dies aber nicht. Die sukzessiven Blöcke 291a-f haben einen Hashbereich. In der Fig. 2a sind derartige Hashbereiche in der oberen linken Ecke des jeweiligen Blocks eingezeichnet. Die Anordnung des Hashbereichs im jeweiligen Block ist jedoch beliebig. Der Blockanfang ist hierfür lediglich ein Beispiel. Die sukzessiven Blöcke enthalten jeweils die Hashwerte des jeweils vorhergehenden Blocks. Beispielsweise enthält der Block 291a den Hashwert des Startblocks 290 und der Block 291b den Hashwert des Blocks 291a. Beispielsweise kommt hierbei der SHA zum Einsatz. Blockverkettungen 280a-c können beliebige Längen aufweisen.

In einem Beispiel kann an die Blockverkettung 280b der neue Block 293g angefügt werden. Dazu wird beispielsweise der SHA-256-Hashwert von Block 293f berechnet und in den Hashbereich des Blocks 293g geschrieben. Es resultiert daraus eine Blockverkettung, die um einen Datenblock länger ist. Eine derart erweiterte Blockverkettung ist in der Fig. 2a beispielsweise als Blockverkettung 280c dargestellt.

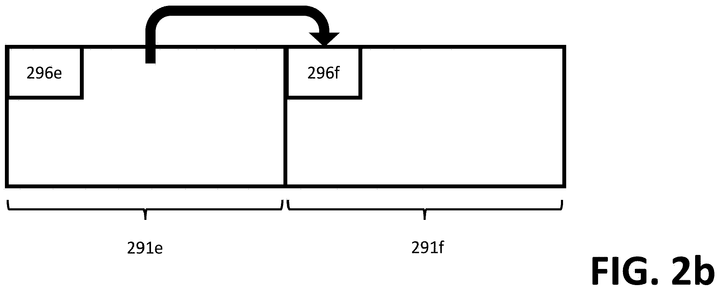

Die Fig. 2b zeigt eine schematische Darstellung der letzten beiden Blöcke 291e, 291f der Blockverkettung 280a im Hinblick auf die Verkettung der Einzelglieder einer solchen Blockverkettung. Die Hashregion 296f des Blocks 291f enthält den Hashwert des Blocks 291e. Diese Beziehung wird durch den Pfeil dargestellt.

Der Block 291e umfasst auch seine eigene Hashregion 296e. Hierdurch wird eine konsekutive Verkettung erreicht. Dadurch wird insbesondere erreicht, dass ein lokales Verändern von Daten innerhalb der Kette zu Inkonsistenzen der sukzessiven Verkettung führt.

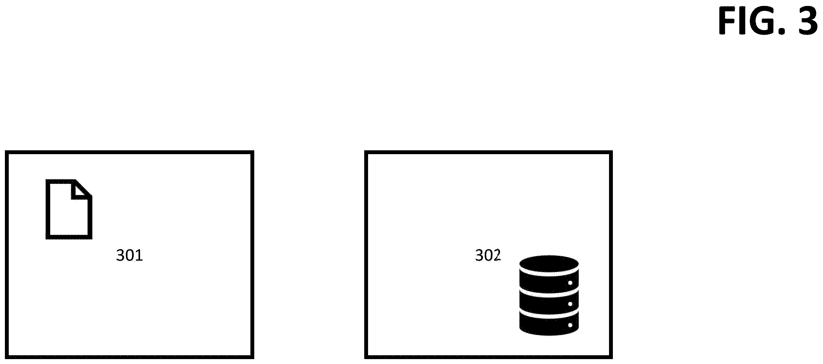

Die Fig. 3 zeigt eine schematische Darstellung einer Datenstruktur und eines Mediums oder Systems, welches die Integrität der auf ihm gespeicherten Daten algorithmisch und/oder mathematisch absichert, gemäß einer Ausführungsform der vorliegenden Erfindung. Die Datenstruktur 301 enthält Daten. Daten können beispielsweise Textdaten, Bilddaten, Audiodaten, Videodaten, Binärdaten etc. enthalten. Es können auch Dateien oder Teile von Dateien als Daten zum Einsatz kommen. Beispielsweise können die Daten so auch in einem Dateiformat vorliegen oder einem Format oder in einer Form, welche einem Dateiformat ähnelt. In einem weiteren Beispiel kommen Daten im Format JavaScript Object Notation (JSON-Format) zum Einsatz. Die Daten können beispielsweise so ausgestaltet sein, dass sie Datenelemente enthalten, die in einem Dateiformat vorliegen. Zum Beispiel kann ein Bild ein Datenelement sein und im JPEG-Format vorliegen. Datenelemente können aber auch kleinere Einheiten sein. Insbesondere kann dabei ein Dateiformat beispielsweise die den Datenelementen übergeordnete Struktur festlegen. Beispielsweise kann eine Datei im JSON-Format vorliegen und viele Datenelemente enthalten, wobei die Datenelemente selbst beispielsweise Textdaten enthalten.

Das Medium oder System 302, welches die Integrität der auf ihm gespeicherten Daten algorithmisch und/oder mathematisch absichert, kann ebenfalls Daten speichern und/oder erfassen. Das Medium oder System 302 umfasst dazu in einem Beispiel Mittel, welche zum Erfassen und/oder Speichern von Daten eingerichtet sind. Diese können Daten in flüchtiger oder nicht-flüchtiger Form erfassen und/oder speichern. Als Technologien kommen lediglich beispielhaft in Frage eine oder mehrere aus: Festplatten, Magnetspeicher, Solid State Drives (SSD), RAM, ROM, optische Speicher, Network Attached Storage (NAS), und vieles mehr. Da erfindungsgemäß die Integrität der gespeicherten Daten algorithmisch und/oder mathematisch abgesichert wird, sind im Allgemeinen sämtliche kontemporäre und zukünftige Speicher- und Datenverarbeitungstechnologien zur Verwendung mit der vorliegenden Erfindung zugänglich.

In einem Ausführungsbeispiel umfasst das Medium oder System 302, welches die Integrität der auf ihm gespeicherten Daten algorithmisch und/oder mathematisch absichert, eine Blockverkettung. Beispielsweise werden in der Blockverkettung auf dem Medium oder System 302 Hashwerte gespeichert, welche aus den Daten 301 oder einem Teil der Daten 301 erzeugt werden.

Häufig besteht zwischen den Daten 301 (oder einer die Daten 301 verarbeitenden Einheit, nicht eingezeichnet) eine Datenverbindung, beispielsweise ein Datenbus, eine Netzwerkverbindung, oder ähnliches. Beispielsweise kann die Verbindung (nicht eingezeichnet) auch über das Internet oder ein Intranet erfolgen.

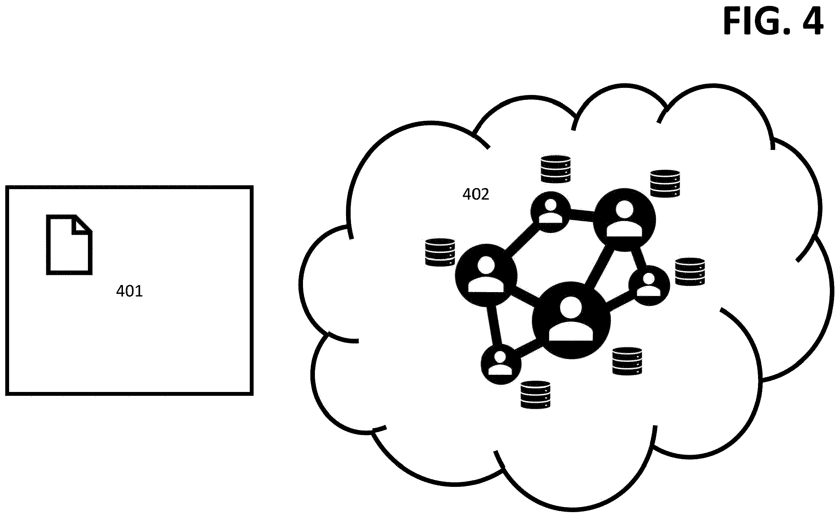

Die Fig. 4 zeigt eine schematische Darstellung einer Datenstruktur und eines Mediums oder Systems, welches die Integrität der auf ihm gespeicherten Daten algorithmisch und/oder mathematisch absichert, gemäß einer Ausführungsform der vorliegenden Erfindung. Die Datenstruktur 401 enthält Daten und entspricht im Wesentlichen der Datenstruktur 301 der Fig. 3. In diesem Ausführungsbeispiel umfasst das Medium oder System 402, welches die Integrität der auf ihm gespeicherten Daten algorithmisch und/oder mathematisch absichert, ein verteiltes System zur Sicherung der Daten, z.B. ein Distributed Ledger. Das verteilte System kann beispielsweise ein Computernetzwerk umfassen oder in ein solches eingebracht sein.

Das Medium oder System, welches die Integrität der auf ihm gespeicherten Daten algorithmisch und/oder mathematisch absichert, kann auch ein Blockverkettung umfassen, muss dies aber nicht. Vielmehr stellen die Blockverkettung und das verteilte System zwei voneinander unabhängige Ausgestaltungen des Mediums oder Systems, welches die Integrität der auf ihm gespeicherten Daten algorithmisch und/oder mathematisch absichert, dar. Das bedeutet insbesondere, dass diese beiden Ausgestaltungen sowohl unabhängig voneinander, als auch in Kombination, im Zusammenhang mit der vorliegenden Erfindung realisiert werden können.

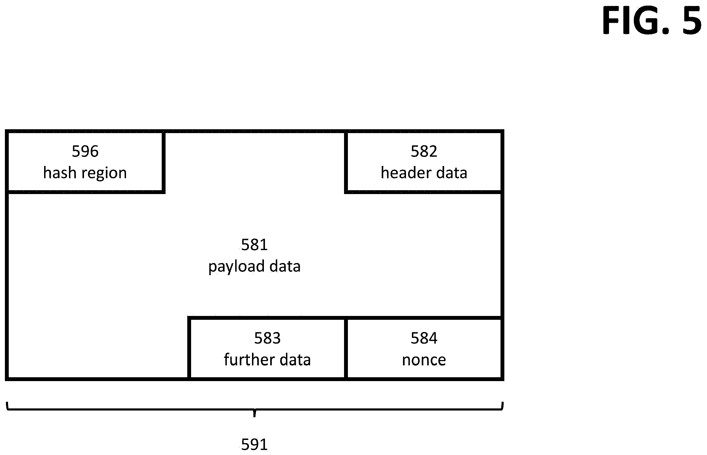

Die Fig. 5 zeigt eine beispielhafte Ausgestaltung eines Datenblocks für eine Blockverkettung, die geeignet ist für eine Verwendung im Zusammenhang mit der vorliegenden Erfindung. Der Datenblock 591 umfasst einen Hashbereich 596. In diesen Hashbereich kann unter anderem der Hashwert des vorhergehenden Blockes der Blockverkettung eingebracht werden, wenn der Datenblock 591 an eine bestehende Blockverkettung angebracht wird. Der Hashbereich 596 kann sich an beliebiger Stelle im Datenblock 591 befinden.

Der Datenblock 591 kann außerdem Nutzdaten 581 umfassen. Nutzdaten können beispielsweise und unter anderem auch Hashwerte umfassen, welche auf Basis einer Datenstruktur 301 erzeugt wurden.

Der Datenblock 591 kann außerdem Headerdaten 582 umfassen. Der Datenblock 591 kann außerdem weitere Daten 583 umfassen. Auch die Headerdaten 582 und die weiteren Daten 583 können sich jeweils an beliebiger Stelle im Datenblock 591 befinden.

Der Datenblock 591 kann außerdem eine Nonce 584 umfassen. Beispielsweise umfasst die Nonce 584 eine kryptographische "number only used once". In einem Beispiel mit Blockverkettung wird für jeden neuen Block eine feste oder variable Bedingung gestellt. Dabei wird die Nonce 584 so gewählt, dass die Bedingung erfüllt wird. In einem Beispiel ist die Bedingung an den Block eine Bedingung an einen Hashwert des Blockes. In einem Beispiel kann der Block nur die Blockverkettung angefügt werden, wenn die Bedingung erfüllt ist. In einem Beispiel entsteht durch die Schwierigkeit, die Nonce 584 so zu wählen, dass die Bedingung erfüllt ist, ein "Proof of Work". Dadurch wird die resultierende Blockverkettung besonders sicher gegenüber Angriffen mit Manipulationsabsichten.

Auch die Nonce 584 kann sich an beliebiger Stelle im Datenblock 591 befinden.

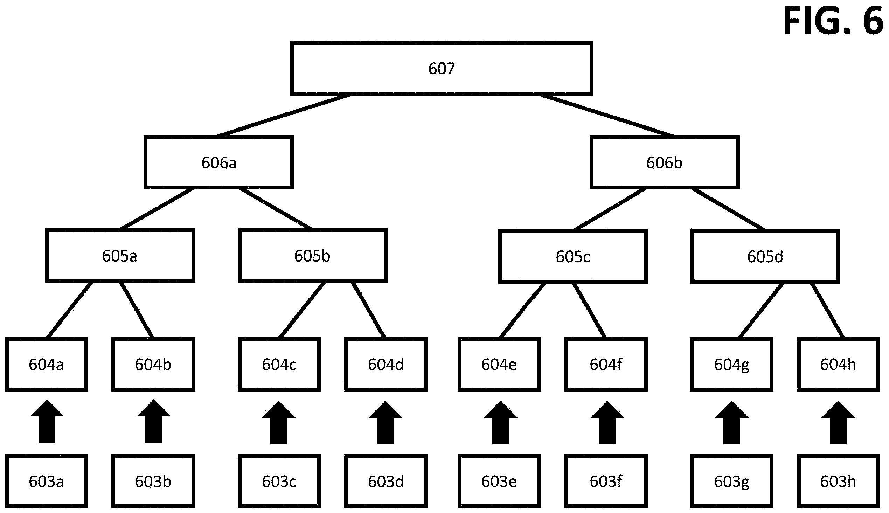

Die Fig. 6 zeigt eine allgemeine schematische Darstellung eines Hashbaumes oder Merkle-Trees zur Anwendung im Zusammenhang mit der vorliegenden Erfindung. An einem Ausführungsbeispiel wird im Folgenden eine mögliche Anwendung des Hashbaumes oder Merkle-Trees dargestellt.

Aus den Datenelementen 603a-h, die beispielsweise aus einer Datenstruktur 301 entnommen werden, werden beispielsweise jeweils Einzel-Hashwerte 604a-h (dargestellt als die Blätter des Hashbaumes) erzeugt. In diesem Beispiel ist der Hashbaum ein binärer Hashbaum, die Erfindung erschöpft sich hierin jedoch nicht. Die Einzel-Hashwerte werden rekursiv zu davon abgeleiteten Hashwerten wie beispielsweise Master-Hashwerten kombiniert. Beispielsweise können die Knoten 606a, 606b Master-Hashwerte beinhalten, die jeweils einer Instanz entsprechen. Sodann kann beispielsweise auch die Wurzel 607 des Baumes als Master-Hashwert aufgefasst werden.

Die Kombination von den auf Knoten lokalisierten Hashwerten zu dem auf dem Elternteil-Knoten lokalisierten Hashwert kann auf vielfältige Art und Weise geschehen. Beispielsweise wird die Konkatenation (sukzessive Aneinanderfügung) der auf den Knoten befindlichen Hashwerte gebildet und das Ergebnis erneut der Anwendung einer Hashfunktion unterzogen. So können beispielsweise im Binärbaum der Fig. 6 die Hashwerte der Knoten 605a und 605b aneinandergefügt werden, um auf das Ergebnis beispielsweise SHA256 anzuwenden und das Ergebnis im Knoten 606a zu hinterlegen.

Sämtliche Datenelemente 603a-h können Nutzdatenelemente (wie "John" und "Doe") sein, müssen es aber nicht. Es können auch Seeds/Salts darunter sein. Beispielsweise können die Datenelemente 603a, 603c, 603e, 603g Nutzdatenelemente sein, während die Datenelemente 603b, 603d, 603f, 603h Seeds/Salts beinhalten. Wenn sämtliche Datenelemente 603a-h Nutzdatenelemente umfassen, können beispielsweise die Hashwerte 604a-h als Einzel-Hashwerte zu den Nutzdatenelementen angesehen werden. Wenn die Datenelemente 603b, 603d, 603f, 603h Seeds/Salts beinhalten, können beispielsweise die Hashwerte 605a-d als Einzel-Hashwerte angesehen werden.

Der Hashbaum kann in einem Computerspeicher als Baumstruktur realisiert werden. Jedoch können ebenso andere Datenstrukturen zum Einsatz kommen, welche in der Lage sind, eine solche Baumstruktur abzubilden. Beispielsweise kann dies durch den Einsatz einer Liste oder verschiedener Listen geschehen.

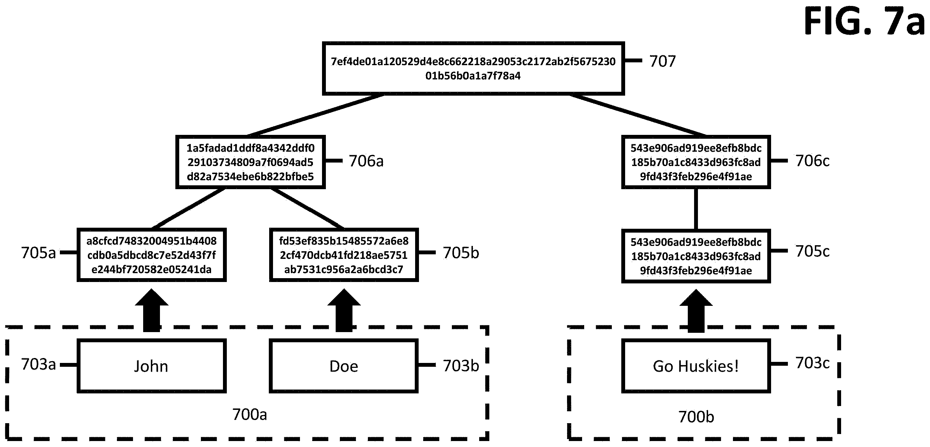

Konkrete einfache Varianten der Anwendung eines Hashbaumes oder Merkle-Trees werden im Zusammenhang mit den Figuren 7a, 7b, 8 - 10 diskutiert.

Die Fig. 7a zeigt ein konkretes Beispiel für die Anwendung eines Hashbaumes oder Merkle-Trees im Zusammenhang mit der vorliegenden Erfindung. Beispielsweise kann eine solche Baumstruktur bei einem Verfahren zum Speichern oder Sichern von Daten einer Datenstruktur nach Anspruch 1 oder einem Verfahren zum Verifizieren von Daten innerhalb einer Datenstruktur nach Anspruch 10 zum Einsatz kommen.

Eine erste Instanz 700a umfasst zwei Datenelemente 703a, 703b. Eine zweite Instanz umfasst ein Datenelement 703c. Aus den Datenelementen 703a-c werden beispielsweise mit SHA256 Einzel-Hashwerte 705a-c berechnet. Der Master-Hashwert 706a für die erste Instanz wird in diesem Beispiel durch Anwendung von SHA256 auf die Konkatenation der Einzel-Hashwertes 705a und 705b erzeugt. Der Master-Hashwert 706b für die zweite Instanz ist in diesem Beispiel unmittelbar durch den Einzel-Hashwert 705b gegeben. Dies ist möglich, da die zweite Instanz in diesem Beispiel nur ein Datenelement 703c enthält.

Ein Master-Hashwert 707 wird analog erzeugt, der demnach sowohl der ersten als auch der zweiten Instanz übergeordnet ist.

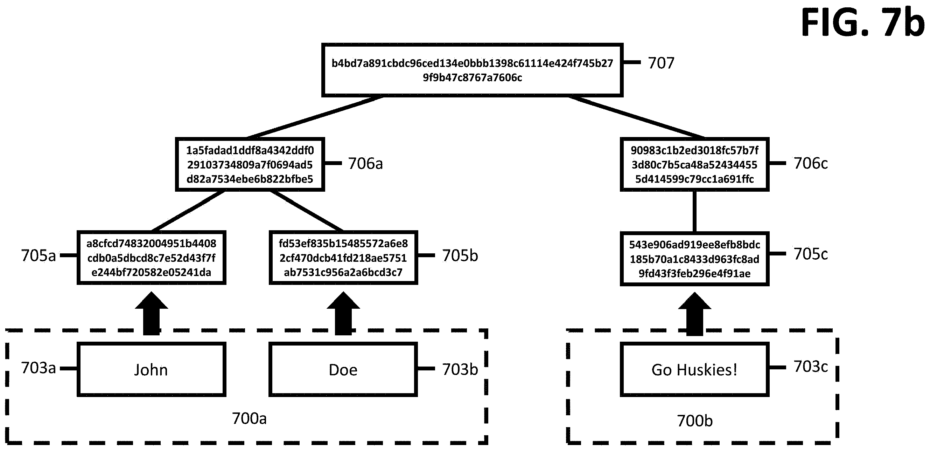

Die Fig. 7b zeigt ein weiteres konkretes Beispiel für die Anwendung eines Hashbaumes oder Merkle-Trees im Zusammenhang mit der vorliegenden Erfindung, welches sich von dem Beispiel in Fig. 7a lediglich geringfügig unterscheidet. Daher wird der Unterschied diskutiert und im übrigen auf die obige Diskussion verwiesen. In diesem Beispiel wird der Master-Hashwert 706c erzeugt, indem auf den Hashwert 705c abermals SHA256 angewandt wird.

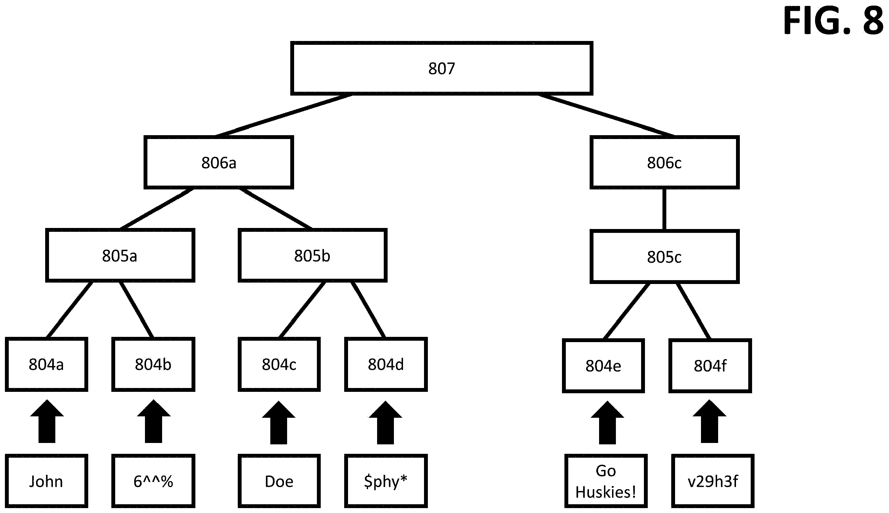

Die Fig. 8 zeigt eine weitere schematische Darstellung eines Hashbaumes oder Merkle-Trees zur Anwendung im Zusammenhang mit der vorliegenden Erfindung im Rahmen eines konkreten Beispiels mit Seeds/Salts.

Die Blätter 804a, 804c, 804e enthalten Hashwerte der Datenelemente "John", "Doe" und "Go Huskies!". Die Blätter 804b, 804d, 804f enthalten Hashwerte der Seeds/Salts wie in der Figur angegeben. Durch den Einsatz der Seeds/Salts werden insbesondere Wörterbuchangriffe erschwert, wie in der Beschreibung der Erfindung diskutiert wurde. Die Hashwerte 804a, 804c, 804e der Datenelemente werden nun mit den Hashwerten der Seeds/Salts kombiniert (wie beispielsweise weiter oben diskutiert), um daraus Einzel-Hashwerte 805a-c für die Datenelemente und daraus sukzessive Master-Hashwerte 806a, 806c, 807 zu generieren.

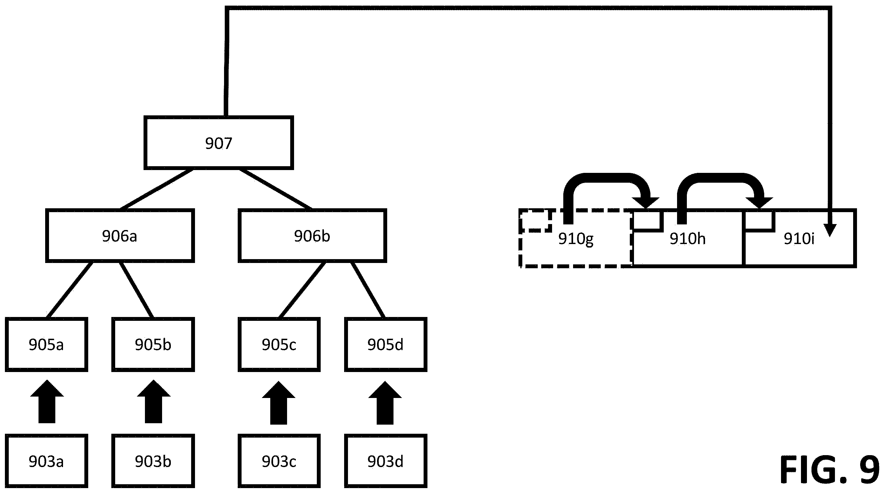

Die Fig. 9 zeigt eine schematische Darstellung eines Hashbaumes oder Merkle-Trees und einen Ausschnitt aus einer Blockverkettung zur Anwendung im Zusammenhang mit der vorliegenden Erfindung. In diesem Beispiel erfolgt die Erzeugung eines Master-Hashwertes 907 beispielsweise wie bereits weiter oben diskutiert wurde.

Die drei Datenblöcke 910g, 910h, 910i sind beispielsweise die letzten drei Datenblöcke (das "Ende") einer Blockverkettung. Der Datenblock 910g ist durch gestrichelte Linien dargestellt, um zu verdeutlichen, dass weitere Datenblöcke dem Datenblock 910g vorangehen können. Der Datenblock 910i nimmt nun beispielsweise den Master-Hashwert 907 in seinem Nutzdatenbereich auf, um ihn vor zukünftiger Manipulation sicher abzulegen, wie durch einen Pfeil in der Figur symbolisiert ist.

Der Datenblock 910i muss außerdem zu diesem Zeitpunkt noch nicht fester Bestandteil der Blockverkettung sein.

Die Erfindung ist aber auch keineswegs darauf beschränkt nur einen Master-Hashwert beispielsweise in einer Blockverkettung zu sichern. Insbesondere ist die Erfindung keineswegs darauf beschränkt nur die Wurzel des Merkle-Trees beispielsweise in einer Blockverkettung zu sichern. In einem Beispiel kann neben dem Master-Hashwert 907 auch der Master-Hashwert 906a beispielsweise in einer Blockverkettung gesichert werden.

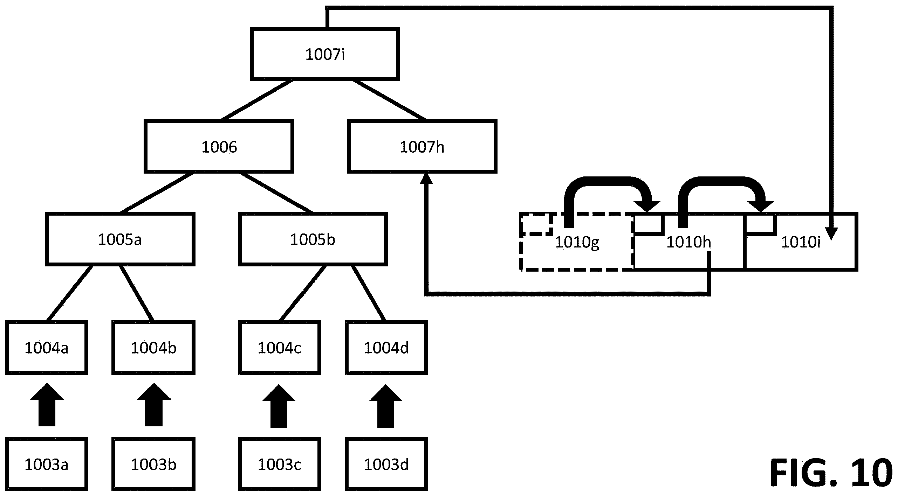

Die Fig. 10 zeigt eine schematische Darstellung eines Hashbaumes oder Merkle-Trees und einen Ausschnitt aus einer Blockverkettung zur Anwendung im Zusammenhang mit der vorliegenden Erfindung, welche sich von dem Beispiel in Fig. 9 lediglich geringfügig unterscheidet. Daher wird der Unterschied diskutiert und im übrigen auf die obige Diskussion verwiesen.

In Fig. 10 wird ein Master-Hashwert 1006 aus Datenelementen erzeugt. Dieser wird mit einem vorhergehenden Hashwert 1007h kombiniert, um einen weiteren Master-Hashwert 1007i zu erhalten. Sodann wird insbesondere der weitere Master-Hashwert 1007i im Datenblock 1010i der Blockverkettung gesichert. Der vorhergehende Hashwert 1007h entstammt beispielsweise dem Block 1010h, es kann aber auch ein vorhergehende Hashwert 1007h beispielsweise aus einem weiter oder deutlich weiter zurückliegenden Block entnommen werden.

In einem Beispiel werden zu Daten, welche sich über einen Zeitraum hinweg verändern, kontinuierlich Master-Hashwerte gesichert. Beispielsweise ändert sich so der Master-Hashwert 1006 (und auch der weitere Master-Hashwert 1007i), wenn eines der Datenelemente 1003a-d geändert wird. Beispielsweise wurde zu einem ersten Zeitpunkt, welcher der Darstellung der Blockverkettung in Fig. 10 zeitlich vorangeht, ein weiterer Master-Hashwert 1007i auf Basis der Datenelemente 1003a-d erzeugt und in dem Block 1010h abgelegt. Nun kann zu einem späteren Zeitpunkt (dargestellt in Fig. 10) der damals abgelegte Hashwert aus Block 1010h ausgelesen werden und sodann als vorhergehender Hashwert 1007h zum Einsatz gebracht werden.

Die Erfindung ist aber keineswegs auf dieses Szenario beschränkt. Bei den vorhergehenden Hashwert 1007h kann es sich auch um einen anderen Hashwert, beispielsweise um einen Hashwert auf Grundlage völlig anderer Daten, handeln.

Logisch entsteht hierdurch ein weiterer Verkettungsmechanismus, zusätzlich zu der Verkettung, welche die Blockverkettung selbst bereits bereitstellt. Durch diese "Blockchain in the blockchain" wird das System noch sicherer gegenüber Angriffen, insbesondere Angriffen mit Manipulationsabsichten.

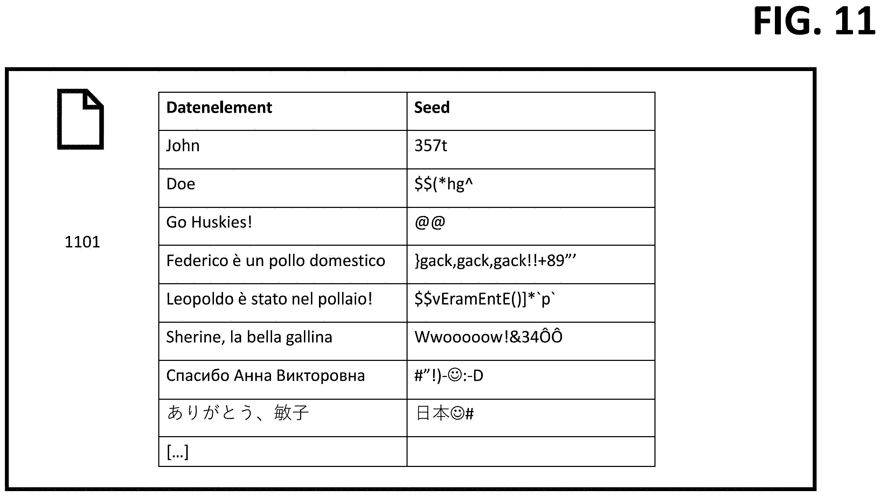

Die Fig. 11 zeigt ein einfaches Beispiel für eine Datenstruktur. Eine Datenstruktur kann Datenelemente und diesen Datenelementen zugeordnete Seed/Salt-Werte umfassen. Lediglich beispielhaft und symbolisch ist eine Tabelle dargestellt. Die tatsächliche Datenstruktur in keineswegs darauf beschränkt.

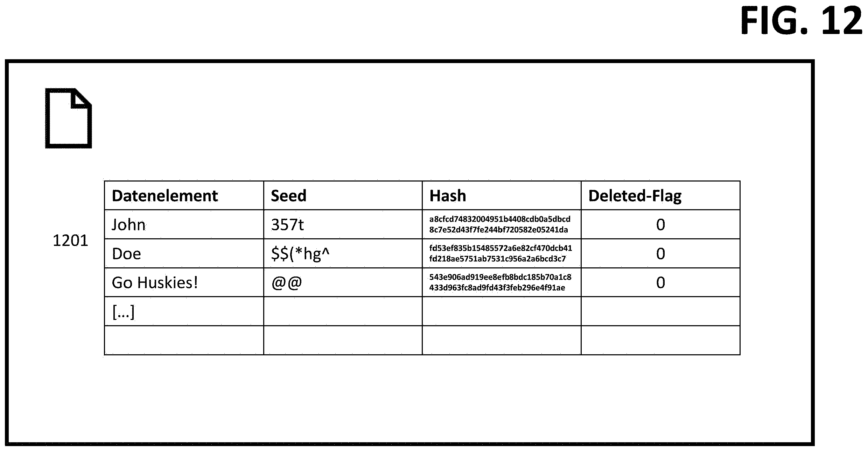

Die Fig. 12 zeigt ein weiteres einfaches Beispiel für eine Datenstruktur. Die Datenstruktur umfasst Hashwerte und Deleted-Flags. Die Hashwerte können die SHA256-Hashwerte der Datenelemente sein. Es können aber auch Hashwerte sein, die durch Kombination von datenelementbasierten und seed/saltbasierten Hashwerte erzeugt wurden (siehe weiter oben). Die Deleted-Flags können Auskunft darüber geben, ob ein Datenelement bereits gelöscht wurde. Beispielsweise kann der Wert 1 bedeuten, dass das Datenelement gelöscht wurde, während der Wert 0 bedeuten kann, dass das Datenelement nicht gelöscht wurde, sondern existiert.

Lediglich beispielhaft und symbolisch ist eine Tabelle dargestellt. Die tatsächliche Datenstruktur ist keineswegs darauf beschränkt.

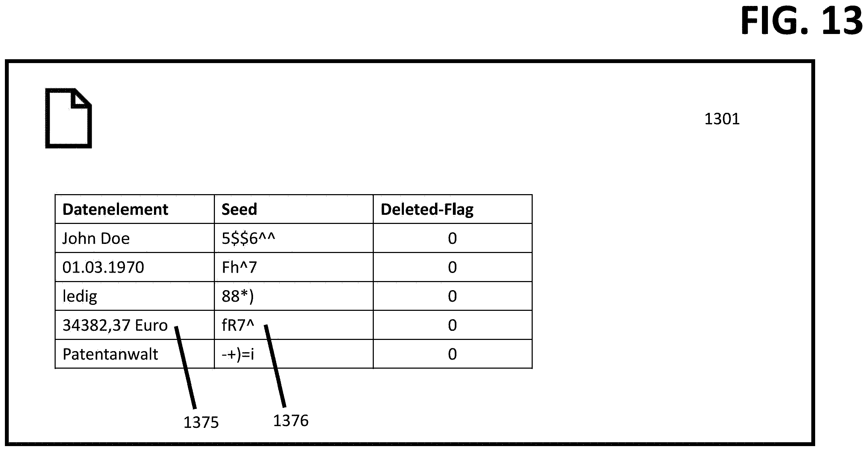

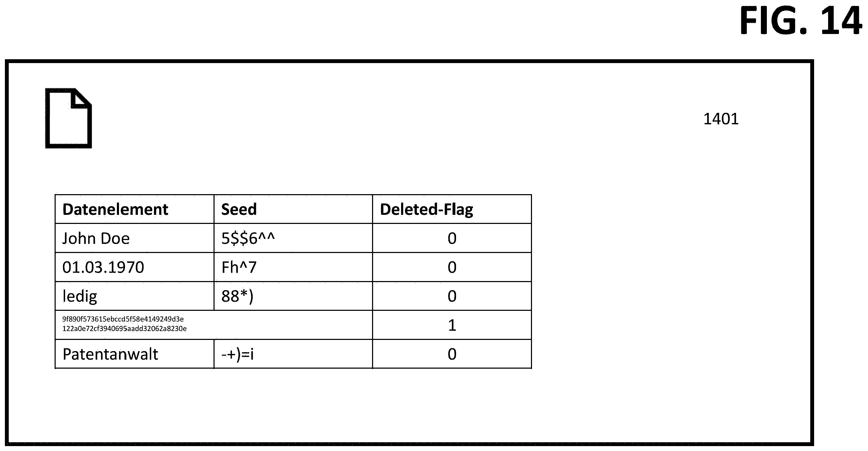

Die Figuren 13 und 14 zeigen ein weiteres einfaches Beispiel für eine Datenstruktur und illustrieren den Vorgang des Löschens von Daten am Beispiel eines einzelnen Datenelements.

In Figur 13 existiert das Datenelement 1375 mit dem Inhalt "34382,37 Euro". Beispielsweise könnte dies einen Kontostand symbolisieren, welcher im Folgenden aus Datenschutzgründen gelöscht werden soll. Der Seed/Salt 1376 des zu löschenden Datenelements 1375 ist durch "fR7^"gegeben.

In Figur 14 wurde das Datenelement durch einen Hash ersetzt. In diesem Beispiel wurden das Datenelement "34382,37 Euro" und sein Seed/Salt "fR7^" durch den kombinierten Einzel-Hashwert ersetzt. Speziell wurde in diesem Beispiel SHA256-Hashwerte für das Datenelement als auch den Seed berechnet, und das Datenelement und sein Seed/Salt wurden durch den Hash der Konkatenation beider Werte ersetzt. Der Hash des Datenelements ist
967b2d9e49f4c7fde0b0fa08422eecfd51e0d943381e577ea9cef8fcbeb7611a, der Hash des Seeds/Salts ist ae44ce039deb375239c6b50e6fc5c6ce5fa3e470c97b5fa498baf8fb17a04dea und der Hash der Konkatenation ist
9f890f573615ebccd5f58e4149249d3e122a0e72cf3940695aadd32062a8230e.

In einem anderen Beispiel wird der Seed direkt an den Hash des Datenelements angehängt. Es wird also SHA256 auf
967b2d9e49f4c7fde0b0fa08422eecfd51e0d943381 e577ea9cef8fcbeb7611 afR7^ angewandt und das Ergebnis ist
7921783fed 167238a90303aeed 14eb8cb132a4173c63017f58908f330659bdc3. Dieses Beispiel ist jedoch in der Figur nicht dargestellt.

Das Deleted-Flag wurde auf 1 gesetzt.

Durch das Ersetzen ist das Datenelement nun datenschutzkonform gelöscht, es kann von berechtigten Dritten jedoch immer noch verifiziert werden. Insbesondere können die übrigen Datenelemente in Zukunft verifiziert werden, und dies kann insbesondere beispielsweise auf Basis eines Master-Hashwertes geschehen, welcher beispielsweise in einer Blockverkettung gesichert wurde.

Das Verfahren kann auch direkt mit Einzel-Hashwerten ohne Seeds/Salts durchgeführt werden. In einem anderen Beispiel kommen Seeds/Salts zum Einsatz, jedoch wird nur das Datenelement selbst durch einen Hashwert ersetzt.

In einem anderen Beispiel können auch mehrere Datenelemente gelöscht werden. In einem Beispiel mit mehreren Datenelementen wird jedes Datenelement durch einen Hashwert ersetzt.

In einem anderen Beispiel, bei dem mehrere Datenelemente gelöscht werden sollen, entsprechen die zu löschenden Datenelemente bzw. deren Hashwerte sämtlichen Blättern eines Unterbaumes eines Hashbaumes. Beispielsweise können in einer solchen Situation auch sämtliche Datenelemente durch einen einzigen Master- oder Einzel-Hashwert ersetzt werden.

In einem Beispiel werden zwei Datenelemente gelöscht, welche Hashwerten in einem binären Hashbaum entsprechen, welche auf benachbarten Blättern liegen und dabei Kinder eines gemeinsamen Elternteil-Knotens sind. Beispielsweise können dann auch beide Datenelemente derart gelöscht werden, dass beide Datenelemente durch einen Hashwert ersetzt werden, welcher dem gemeinsamen Elternteil-Knoten des Hashbaumes entspricht.

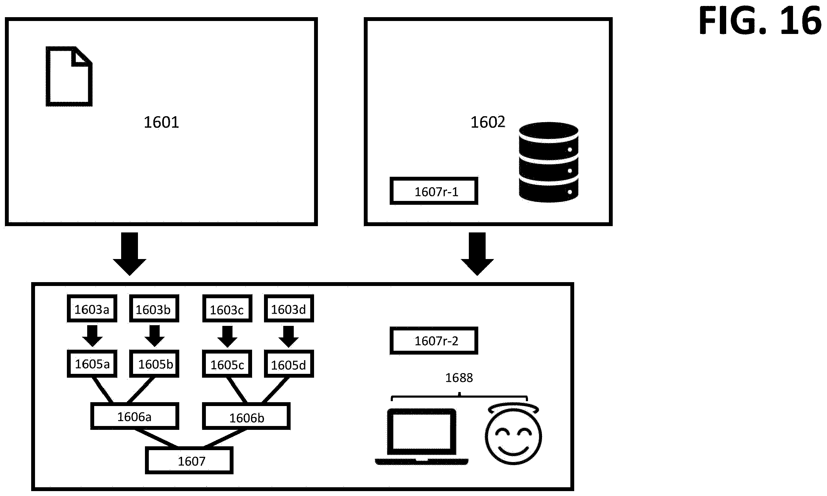

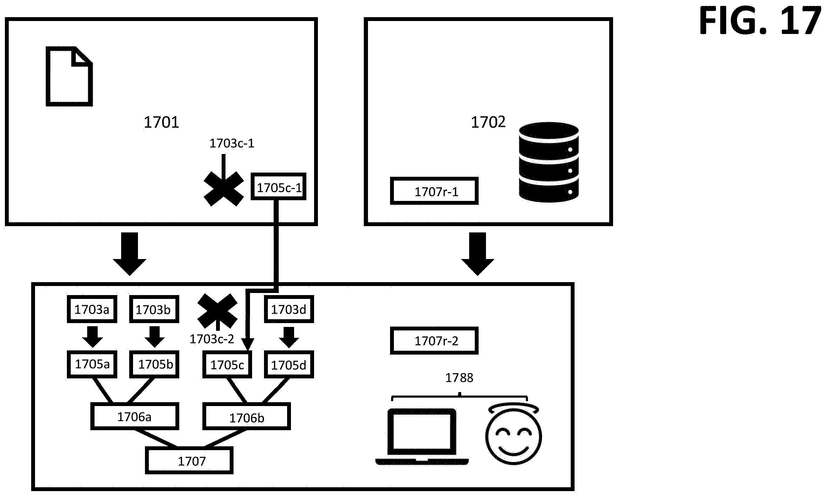

Es wird außerdem auf die Figuren 16 und 17 verwiesen, in deren Zusammenhang das Verifizieren beispielhaft beschrieben wird.

Lediglich beispielhaft und symbolisch ist eine Tabelle dargestellt. Die tatsächliche Datenstruktur ist keineswegs darauf beschränkt.

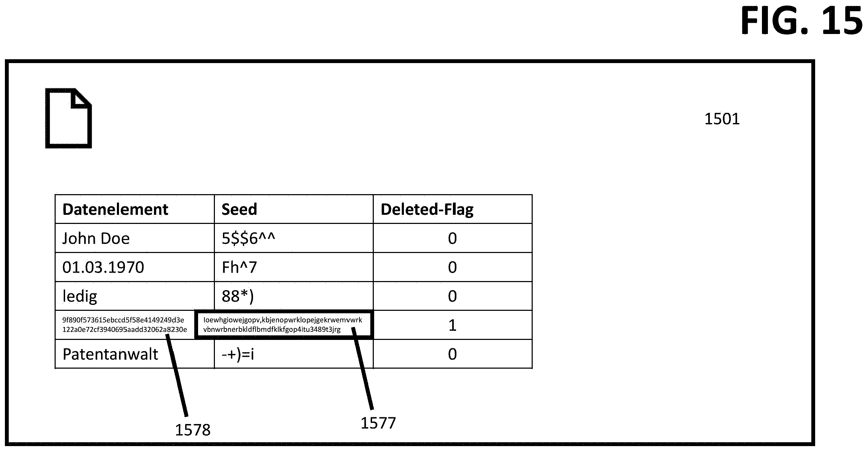

Die Fig. 15 zeigt ein weiteres einfaches Beispiel für eine Datenstruktur, welches der Struktur der Figur 14 im Zusammenhang mit den Löschen eines Datenelements ähnelt.

In einem Beispiel ist der Hashwert, durch den ein Datenelement (und beispielsweise sein Seed/Salt) ersetzt wird, kleiner als das Datenelement selbst. In diesem Beispiel werden daher übrige Regionen der Datenstruktur, die nicht durch den erzeugten Hashwert belegt werden, mehrfach und/oder durch randomisierte Daten 1577 überschrieben.

Dadurch ist das Löschen besonders gründlich und sicher und genügt höchsten Datenschutzansprüchen.

Lediglich beispielhaft und symbolisch ist eine Tabelle dargestellt. Die tatsächliche Datenstruktur ist keineswegs darauf beschränkt.

Die Fig. 16 zeigt ein einfaches Beispiel eines Verifizierens von Daten im Rahmen der vorliegenden Erfindung.

In der Figur sind eine Datenstruktur 1601 und ein Medium oder System 1602, welches die Integrität der auf ihm gespeicherten Daten algorithmisch und/oder mathematisch absichert, dargestellt. Das Medium oder System 1602, welches die Integrität der auf ihm gespeicherten Daten algorithmisch und/oder mathematisch absichert, umfasst in diesem Beispiel einen Referenz-Master-Hashwert 1607r-1.

In diesem Beispiel möchte ein Anwender 1688 gewisse Daten aus der Datenstruktur 1601 mittels des Mediums oder Systems 1602 verifizieren. Der Anwender 1688 kann beispielsweise einen Benutzer in Form einer natürlichen Person und einen Computer umfassen. Der Benutzer ist durch einen Smilie dargestellt. Der Anwender 1688 kann aber auch ein rein elektronisches Computersystem und/oder Teil beispielsweise eines Unternehmens sein. In einem weiteren Beispiel umfasst der Anwender 1688 eine künstliche Intelligenz. Die Erfindung ist hier in keinerlei Hinsicht beschränkt.

In dem dargestellten Beispiel bezieht der Anwender 1688 die Datenelemente 1603a-d aus der Datenstruktur 1601 und möchte diese verifizieren. Nun kann der Anwender beispielsweise Hashwerte 1605a-d auf Basis der Datenelemente berechnen und diese Hashwerte 1605a-d sukzessive auf beispielsweise einen Master-Hashwert 1607 reduzieren.

Der Anwender bezieht außerdem einen Referenz-Master-Hashwert 1607r-2 durch Auslesen eines Referenz-Master-Hashwertes 1607r-1 aus dem Medium oder System 1602, welches die Integrität der auf ihm gespeicherten Daten algorithmisch und/oder mathematisch absichert.

In der Figur ist in dem Medium oder System 1602, welches die Integrität der auf ihm gespeicherten Daten algorithmisch und/oder mathematisch absichert, lediglich ein einzelner Referenz-Master-Hashwert 1607r-1 dargestellt. Das Medium oder System 1602, welches die Integrität der auf ihm gespeicherten Daten algorithmisch und/oder mathematisch absichert, kann aber beispielsweise auch problemlos mehrere Referenz-Master-Hashwerte umfassen.

Der Anwender 1688 kann nun den Referenz-Master-Hashwert 1607r-2 mit dem von ihm selbst erzeugten Master-Hashwert 1607 vergleichen, und dadurch feststellen, ob die von ihm aus der Datenstruktur 1601 bezogenen Datenelemente 1603a-d Integrität genießen oder ob diese manipuliert wurden.

Der Benutzer ist sehr erfreut darüber, dass er auf das erfindungsgemäße Verfahren zurückgreifen kann, weshalb er in der Figur 16 fröhlich lächelt.

Das hier dargestellte Beispiel ist lediglich als sehr einfaches Beispiel zu betrachten und kann insbesondere durch sämtliche andere offenbarte Erweiterungen und Weiterbildungen ergänzt werden. Beispielsweise ist die Kombination dieses Beispiels mit dem Einsatz von Seeds/Salts problemlos möglich.

Die Fig. 17 zeigt ein weiteres einfaches Beispiel eines Verifizierens von Daten im Rahmen der vorliegenden Erfindung. Daher wird der Unterschied zu dem Fall der Fig. 16 diskutiert und im übrigen auf die obige Diskussion verwiesen.

In diesem Beispiel wurde ein Datenelement 1703c-1 aus der Datenstruktur 1701 erfindungsgemäß nachträglich gelöscht. Das Datenelement 1703c-1 ist daher in der Datenstruktur 1701 nicht mehr vorhanden, was durch das schwarze Kreuz symbolisiert ist. In diesem Beispiel existiert in der Datenstruktur 1701 jedoch ein Einzel-Hashwert 1705c-1, welcher auf Grundlage des ehemaligen Datenelements 1703c-1 beim Löschen desgleichen erzeugt worden ist.

Der Anwender 1788 möchte nun die übrigen Datenelemente 1703a, 1703b, 1703d aus der Datenstruktur 1701 beziehen und diese verifizieren. Zusätzlich zu den Datenelementen 1703a, 1703b, 1703d bezieht er daher, in diesem Beispiel ebenfalls aus der Datenstruktur 1701, den Hashwert 1705c-1 wie in der Figur 17 durch einen Pfeil eingezeichnet. Dadurch erhält er im Ergebnis denselben Master-Hashwert 1707 (d.h. beispielsweise identisch zum Master-Hashwert 1607) und kann die übrigen Datenelemente 1703a, 1703b, 1703d verifizieren, ohne das ursprüngliche Datenelement 1703c-2 zu haben oder dafür zu benötigen.

Der Benutzer ist abermals sehr erfreut darüber, dass er auf das erfindungsgemäße Verfahren zurückgreifen kann, weshalb er auch in der Figur 17 fröhlich lächelt.

Das hier dargestellte Beispiel ist lediglich als sehr einfaches Beispiel zu betrachten und kann insbesondere durch sämtliche andere offenbarte Erweiterungen und Weiterbildungen ergänzt werden. Beispielsweise ist die Kombination dieses Beispiels mit dem Einsatz von Seeds/Salts problemlos möglich.

In einem anderen Beispiel wurden mehrere Datenelemente gelöscht. Wenn beispielsweise (nicht dargestellt) die Datenelemente 1703c und 1703d gelöscht wurden und dabei gemeinsam durch einen im Hashbaum höhergeordneten Hashwert (beispielsweise 1706b) ersetzt wurden, so kann beispielsweise auch ein Hashwert 1706b zum Verifizieren der übrigen Datenelemente direkt der Datenstruktur 1701 entnommen werden. In einer solchen Situation ist dann beispielsweise weder ein Entnahme eines Hashwertes 1705c-1 noch eines Hashwert 1705d erforderlich, sondern das Verfahren zum Verifizieren kann direkt auf Grundlage des Hashwertes 1706b durchgeführt werden.

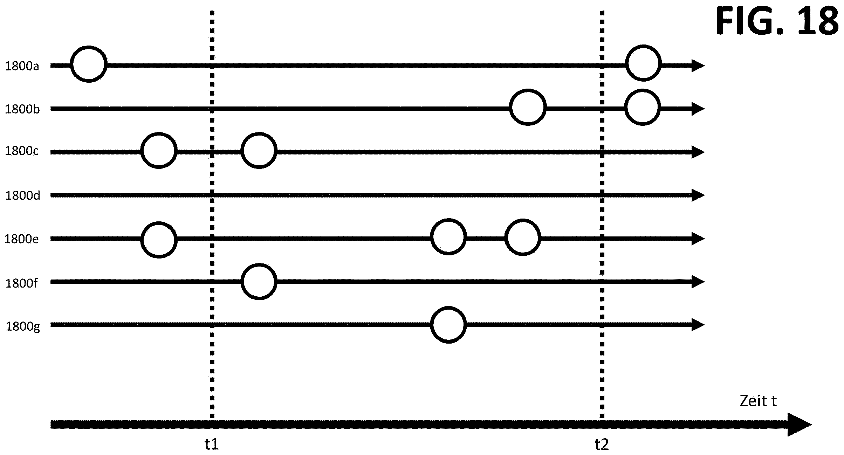

Die Figuren 18 - 20 verdeutlichen verschiedene weitere beispielhafte Aspekte im Zusammenhang mit der Erfindung. Diese haben besondere Relevanz im Hinblick auf ein Verfahren zum Speichern oder Sichern von Daten einer Datenstruktur, und insbesondere im Zusammenhang mit einem Verfahren zum systematischen Erhalt der Integrität einer Datenstruktur.

Eine Koordinatenachse, welche einen Verlauf wie beispielsweise einen Zeitverlauf darstellen kann, verläuft in der Darstellung horizontal von links nach rechts.

Die Achsen 1800a-g beziehen sich auf bestimmte Mengen von Daten. Beispielsweise, aber nicht notwendigerweise, handelt es sich dabei um Instanzen. Die Kreissymbole auf den Instanzenachsen 1800a-g verdeutlichen in diesem Beispiel eine bestimmte Instanz zu einem bestimmten Zeitpunkt. Insbesondere stellen die Kreise symbolisch dar, dass die Daten der entsprechenden Instanz zu diesem Zeitpunkt erzeugt oder geändert wurden. Insbesondere kann eine Instanz zu diesem Zeitpunkt erzeugt worden sein, oder es wurden Daten in der Instanz hinzugefügt oder geändert. Auch kann, im Zusammenhang mit der vorliegenden Erfindung, eine Instanz zu einem bestimmten Zeitpunkt als Instanz im Sinne der Erfindung aufgefasst werden. Beispielsweise kann so sogar eine Instanz zu unterschiedlichen Zeitpunkten als unterschiedliche Instanzen aufgefasst werden. Infolgedessen können auch die Kreissymbole selbst Instanzen entsprechen.

Daten und insbesondere Instanzen können im Zusammenhang mit der Erfindung auf Grundlage unterschiedlicher Schemata und Auswahlverfahren gesichert werden.

In einem Beispiel kommt ein Verfahren zum systematischen Erhalt der Integrität einer Datenstruktur zur Anwendung.

Beispielsweise können Instanzen, die den sechs Kreissymbolen der Fig. 18 im Intervall [t1,t2] entsprechen, als Grundlage zur Erzeugung und Sicherung eines Master-Hashwertes genutzt werden.

In einem anderen Beispiel wird lediglich die aktuellste Instanz einer Instanzenachse gesichert. Die Instanzen der Achse 1800e wurde im Intervall [t1,t2] zweimal geändert. In einem Beispiel wird nur die aktuellere Instanz, d.h. die dem rechten Kreissymbol entsprechende Instanz, zur Erzeugung und Sicherung eines Master-Hashwertes genutzt. Infolgedessen werden dann beispielsweise nur fünf Instanzen zur Erzeugung und Sicherung eines Master-Hashwertes genutzt.

Wird eine Instanz geändert, so kann im Zusammenhang mit der Erfindung ebenfalls lediglich die Änderung als neue Instanz aufgefasst werden (vergleiche "inkrementelles Backup"). Das muss aber keineswegs der Fall sein. In einem weiteren Beispiel werden auch unveränderte Daten, oder ein Teil davon, redundant gesichert. Die Erfindung ist unabhängig von der genauen Wahl der Schemata und kann mit sämtlichen Schemata kombiniert und ausgeführt werden.

In einem weiteren Beispiel werden für Instanzen, wenn Instanzen in dem bestimmten Zeitintervall nicht geändert wurden, ältere Versionen der Instanzen, insbesondere die zeitlich jüngste existente Version, ausgewählt und zur Erzeugung und Sicherung eines Master-Hashwertes genutzt, auch wenn diese Instanzen außerhalb des bestimmten Zeitintervalls liegen.

In einem weiteren Beispiel wird eine bestimmte Anzahl an Instanzen in einem bestimmten Zeitintervall ausgewählt. In einem weiteren Beispiel wird die Länge des Zeitintervalls so angepasst, dass eine bestimmte Anzahl an zu berücksichtigenden Instanzen in dem so bestimmten Zeitintervall liegt.

Die verschiedenen Aspekte dieser Schemata lassen sich im Zusammenhang mit der Erfindung aber auch zu einem hier nicht explizit angeführten Schema kombinieren.

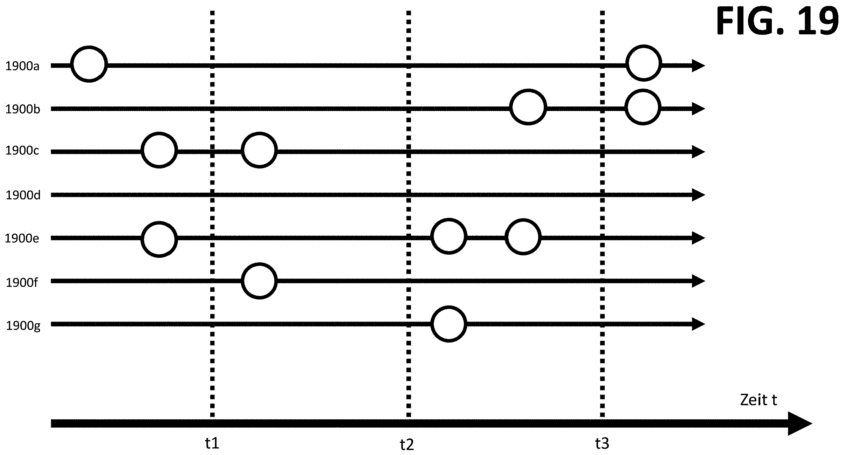

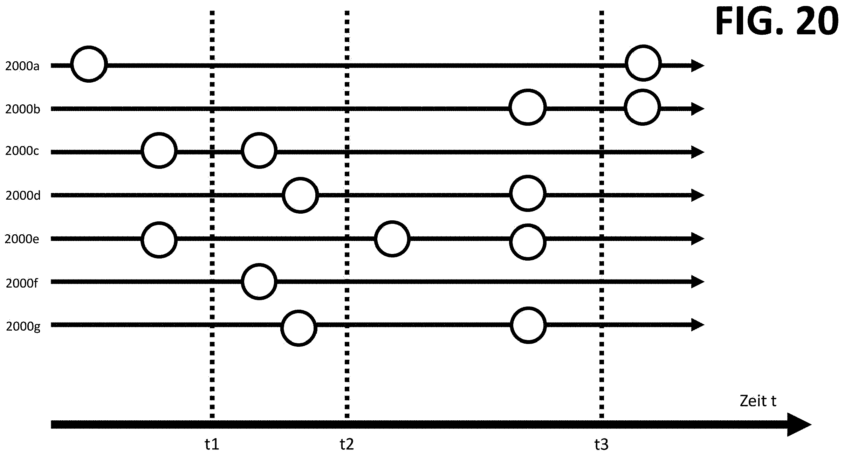

Die Figuren 19 und 20 verdeutlichen verschiedene weitere beispielhafte Aspekte im Zusammenhang mit der Erfindung. Die Zeitintervalle, die zur Sicherung der Datenintegrität genutzt werden, können unterschiedlich sein. Sie können regelmäßig oder auch unregelmäßig sein. Die im Zusammenhang mit der Figur 18 angeführten Auswahlschemata, oder Kombinationen davon, können auch in den Beispielen der Figuren 19 und 20 analog zum Einsatz gebracht werden.

## Patentansprüche

1. **Verfahren zum Speichern oder Sichern von Daten einer Datenstruktur (301),** unter Verwendung eines Systems, welches die Integrität der auf ihm gespeicherten Daten algorithmisch und/oder mathematisch absichert,
umfassend die folgenden Schritte:
a) Auswählen (S01) von einer ersten Instanz (700a), welche sich in der Datenstruktur (301) befindet und zumindest ein erstes Datenelement (703a, 703b) umfasst, und Auswählen (S01) von zumindest einer zweiten Instanz (700b), welche sich in der Datenstruktur (301) befindet und zumindest ein zweites Datenelement (703c) umfasst,
b) für jedes Datenelement: Feststellen (S02b-1), ob das Datenelement in der Vergangenheit unter Ersetzung durch einen dem Datenelement entsprechenden Hashwert gemäß dem Verfahren von Anspruch 6 gelöscht wurde, 1f wenn das Datenelement in der Vergangenheit durch einen dem Datenelement entsprechenden Hashwert gelöscht wurde: 1f sukzessives Auslesen (S02b-2) des genannten Hashwertes zur Verwendung als Einzel-Hashwert; wenn das Datenelement in der Vergangenheit nicht durch einen dem Datenelement entsprechenden Hashwert gelöscht wurde: Berechnen (S02a) von einem Einzel-Hashwert (705a-c) auf Basis des jeweiligen Datenelements (703a-c) innerhalb der entsprechenden Instanz;
c) Erzeugen (S03) mindestens eines Master-Hashwertes (706a, 706c, 707) auf Basis der Einzel-Hashwerte, wobei berechnete (S02a) sowie ausgelesene (S02b-2) Einzel-Hashwerte kombiniert werden, und
d) Sichern (S04) eines Master-Hashwertes (706a, 706c, 707) in einem Medium oder System (302), welches die Integrität der auf ihm gespeicherten Daten algorithmisch und/oder mathematisch absichert.

2. Verfahren nach Anspruch 1, wobei der Schritt des Sicherns (S04) ein Sichern auf einem verteilten Computersystem, mit einem Blockchain-basierten System, mit einem Distributed Ledger, umfasst, wobei das verteilte Computersystem privat oder öffentlich zugänglich sein kann.

3. Verfahren nach Anspruch 1 oder 2, wobei der Schritt des Auswählens (S01) folgendes umfasst:
a) Bestimmen eines Zeitintervalls Δt innerhalb der Datenstruktur (301) und
b) Auswählen der Instanzen (700a, 700b) innerhalb des bestimmten Zeitintervalls Δt; und/oder
Auswählen einer definierten Anzahl an Instanzen (700a, 700b).

4. Verfahren nach einem der vorhergehenden Ansprüche, wobei die Datenelemente innerhalb einer Instanz Zeitstempel umfassen.

5. Verfahren nach einem der vorhergehenden Ansprüche, wobei der Schritt des Berechnens (S02) eines Hashwertes auf Basis einer Struktur, welche das Datenelement und ein weiteres Datenelement, insbesondere einen Seed/Salt, umfasst, erfolgt.

6. **Verfahren zum Löschen eines Datenelements aus einer Datenstruktur (1301, 1401),** das gemäß dem Verfahren von Anspruch 1 gespeichert oder gesichert wurde, umfassend die folgenden Schritte:
a) Berechnen (L01) eines Hashwertes (1578) mindestens auf Basis des zu löschenden Datenelements (1375) innerhalb einer Instanz (700a, 700b), und
b) Ersetzen (L02) des Datenelements (1375) in der Datenstruktur durch den berechneten Hashwert (1578).

7. Verfahren nach Anspruch 6, wobei das Berechnen (L01) des Hashwertes (1578) auf Basis einer Datenstruktur, welche das Datenelement (1375) und ein weiteres Element, insbesondere einen Seed/Salt (1376), umfasst, geschieht.

8. Verfahren nach Anspruch 6 oder 7, wobei das Ersetzen ein zumindest teilweises Überschreiben des ursprünglichen Datenelements in der Datenstruktur durch den berechneten Hashwert umfasst und/oder Bereiche des ursprünglichen Datenelements, die nicht durch den berechneten Hashwert überschrieben wurden mit anderen Daten, insbesondere randomisierten Daten (1577), insbesondere mehrfach, überschrieben werden.

9. Verfahren nach einem der Ansprüche 6 - 8, wobei in Schritt (b) auf Basis des berechneten Hashwertes ein zweites Datenelement berechnet wird, welches von dem zu löschenden Datenelement verschieden ist, und das zu löschende Datenelement durch das zweite Datenelement ersetzt wird.

10. **Verfahren zum Verifizieren** von **Daten innerhalb einer Datenstruktur (1601),** die gemäß dem Verfahren von Anspruch 1 gespeichert oder gesichert wurden, umfassend die folgenden Schritte:
a) Auswählen (V01) einer Instanz, welche mindestens ein Datenelement (1603a-d, 1703a-d) umfasst, aus einer Datenstruktur (1601, 1701),
b) Berechnen (V02a) mindestens eines Einzel-Hashwertes (1605a-d, 1705a, 1705b, 1705d) auf Basis eines ausgewählten Datenelements oder Auslesen (V02b) eines Einzel-Hashwertes (1705c-1, 1705c), welcher ein gelöschtes Datenelement (1703c-1, 1703c-2) repräsentiert,
c) Erzeugen (V03) mindestens eines Master-Hashwertes (1707) auf Basis der Einzel-Hashwerte, wobei insbesondere auch berechnete (V02a) sowie ausgelesene (V02b) Einzel-Hashwerte kombiniert werden können,
d) Auslesen (V04) eines Referenz-Master-Hashwertes (1707r-1, 1707r-2) aus einem Medium oder System (1702), welches die Integrität der auf ihm gespeicherten Daten algorithmisch und/oder mathematisch absichert, oder aus einer Kopie von auf einem solchen Medium oder System gesicherten Daten,
e) Vergleichen (V05) des erzeugten Master-Hashwertes (1707) mit dem ausgelesenen Referenz-Master-Hashwert (1707r-2),
f) Feststellen (V06) eines Ergebnisses in Bezug auf die Integrität der Daten der ausgewählten Instanz, wobei,
wenn der Vergleich des erzeugten Master-Hashwertes (1707) mit dem ausgelesenen Referenz-Master-Hashwert (1707r-2) positiv ausfällt, das Nichtvorliegen einer Datenmanipulation festgestellt wird, oder
wenn der Vergleich des erzeugten Master-Hashwertes (1707) mit dem ausgelesenen Referenz-Master-Hashwert (1707r-2) nicht positiv ausfällt, das Vorliegen einer Datenmanipulation festgestellt wird, wobei das Ergebnis insbesondere zusätzliche Aussagen über den Ort der festgestellten Datenmanipulation enthalten kann.

11. Verfahren nach Anspruch 10, wobei das Medium oder System, welches die Integrität der auf ihm gespeicherten Daten algorithmisch und/oder mathematisch absichert, ein verteiltes Computersystem, insbesondere ein Blockchain-basiertes System, insbesondere ein Distributed Ledger, umfasst, wobei das verteilte Computersystem privat oder öffentlich zugänglich sein kann.

12. Verfahren nach Anspruch 10 oder 11, wobei der Schritt des Erzeugens (V03) eine Reduktion der Anzahl der Hashwerte, insbesondere eine rekursive oder sukzessive Reduktion, umfasst.

13. Verfahren nach einem der Ansprüche 10 - 12, wobei beim Schritt des Auslesens (V04) eines Referenz-Master-Hashwertes (1707r-1, 1707r-2) außerdem zusätzlich ein Zeitstempel ausgelesen wird und/oder die Datenelemente Zeitstempel umfassen.

14. Verfahren nach einem der Ansprüche 10 - 13, wobei der Schritt des Berechnens (V02) eines Hashwertes auf Basis einer Struktur, welche das Datenelement und ein weiteres Element, insbesondere einen Seed/Salt, umfasst, erfolgt.

15. **Verfahren zum systematischen Erhalt der Integrität einer Datenstruktur (301)** und ihrer Überprüfbarkeit, welches ein in regelmäßigen oder unregelmäßigen Zeitabständen wiederkehrend auszuführendes Verfahren zum Sichern von Daten nach einem der Ansprüche 1 - 5 umfasst.

16. **Computersystem,** insbesondere verteiltes Computersystem, welches eingerichtet ist, um
- ein Verfahren zum Sichern von Daten nach einem der Ansprüche 1 - 5,
- ein Verfahren zum Löschen eines Datenelements nach einem der Ansprüche 6 - 9,
- ein Verfahren zum Verifizieren von Daten nach einem der Ansprüche 10 - 14, und/oder
- ein Verfahren zum systematischen Erhalt der Integrität einer Datenstruktur und ihrer Überprüfbarkeit nach Anspruch 15 auszuführen.

17. **Computerprogramm,** umfassend:
- ein Verfahren zum Erzeugen und/oder Sichern von Daten nach einem der Ansprüche 1 - 5,
- ein Verfahren zum Löschen eines Datenelements nach einem der Ansprüche 6 - 9,
- ein Verfahren zum Verifizieren von Daten nach einem der Ansprüche 10 - 14,
- ein Verfahren zum systematischen Erhalt der Integrität einer Datenstruktur und ihrer Überprüfbarkeit nach Anspruch 15.

18. **Computerlesbares Medium,** umfassend computerausführbare Anweisungen, welche dazu geeignet sind, auf einem Computer die Ausführung
- eines Verfahren zum Erzeugen und/oder Sichern von Daten nach einem der Ansprüche 1 - 5,
- eines Verfahren zum Löschen eines Datenelements nach einem der Ansprüche 6 - 9,
- eines Verfahren zum Verifizieren von Daten nach einem der Ansprüche 10 - 14,
- eines Verfahren zum systematischen Erhalt der Integrität einer Datenstruktur und ihrer Überprüfbarkeit nach Anspruch 15.

## Claims

1. **Method for storing or securing of data of a data structure (301),** using a system, which algorithmically and/or mathematically secures the integrity of the data stored on it,
comprising the following steps:
a) selecting (S01) a first instance (700a), which is located in the data structure (301) and comprises at least one first data element (703a, 703b), and selecting (S01) at least one second instance (700b), which is located in the data structure (301) and comprises at least one second data element (703c),
b) for each data element: determining (S02b-1) whether the data element has been deleted in the past by replacing it with a hash value corresponding to the data element according to the method of claim 6,
if the data element has been deleted in the past by a hash value corresponding to the data element: successively reading (S02b-2) said hash value for use as a single hash value; calculating (S02a) a single hash value (705a-c) based on the respective data element (703a-c) within the corresponding instance;
c) creating (S03) at least one master hash value (706a, 706c, 707) on the basis of the individual hash values, whereby calculated (S02a) and read-out (S02b-2) individual hash values are combined, and
d) securing (S04) a master hash value (706a, 706c, 707) in a medium or system (302) which algorithmically and/or mathematically secures the integrity of the data stored on it.

2. Method according to claim 1, wherein the step of securing (S04) comprises securing on a distributed computer system, with a blockchain-based system, with a distributed ledger, wherein the distributed computer system may be private or publicly accessible.

3. Method according to claim 1 or 2, wherein the step of selecting (S01) comprises the following:
a) Determining a time interval Δt within the data structure (301) and
b) Selecting the instances (700a, 700b) within the specified time interval Δt;
and/or
Selecting a defined number of instances (700a, 700b).

4. Method according to any one of the preceding claims, wherein the data elements within an instance comprise timestamps.

5. Method according to any one of the preceding claims, wherein the step of calculating (S02) a hash value is carried out on the basis of a structure comprising the data element and a further data element, in particular a seed/salt.

6. **Method for deleting a data element from a data structure (1301, 1401)** stored or secured according to the method of claim 1, comprising the following steps:
a) Calculating (L01) a hash value (1578) at least on the basis of the data element (1375) to be deleted within an instance (700a, 700b), and
b) Replacing (L02) the data element (1375) in the data structure with the calculated hash value (1578).

7. Method according to claim 6, wherein the calculation (L01) of the hash value (1578) is carried out on the basis of a data structure comprising the data element (1375) and a further element, in particular a seed/salt (1376).

8. Method according to claim 6 or 7, wherein the replacing comprises an at least partial overwriting of the original data element in the data structure by the calculated hash value and/or areas of the original data element which have not been overwritten by the calculated hash value are overwritten with other data, in particular randomized data (1577), in particular several times.

9. Method according to any one of claims 6 - 8, wherein in step (b) a second data element is calculated on the basis of the calculated hash value, which second data element is different from the data element to be deleted, and the data element to be deleted is replaced by the second data element.

10. **Method for verifying data within a data structure (1601),**
stored or secured in accordance with the method of claim 1, comprising the steps of:
a) Selecting (V01) an instance comprising at least one data element (1603a-d, 1703a-d) from a data structure (1601, 1701),
b) Calculating (V02a) at least one single hash value (1605a-d, 1705a, 1705b, 1705d) based on a selected data element or reading (V02b) a single hash value (1705c-1, 1705c) representing a deleted data element (1703c-1, 1703c-2),
c) Creating (V03) at least one master hash value (1707) on the basis of the individual hash values, wherein in particular calculated (V02a) and read-out (V02b) individual hash values can also be combined,
d) Reading (V04) a reference master hash value (1707r-1, 1707r-2) from a medium or system (1702) which algorithmically and/or mathematically secures the integrity of the data stored on it, or from a copy of data secured on such a medium or system,
e) Comparison (V05) of the master hash value created (1707) with the reference master hash value read out (1707r-2),
f) Determining (V06) a result relating to the integrity of the data of the selected instance, wherein,
if the comparison of the master hash value created (1707) with the reference master hash value read (1707r-2) is positive, the absence of data manipulation is determined, or
if the comparison of the created master hash value (1707) with the read-out reference master hash value (1707r-2) is not positive, the existence of data manipulation is determined, wherein the result may in particular contain additional information about the location of the detected data manipulation.

11. Method according to claim 10, wherein the medium or system which algorithmically and/or mathematically secures the integrity of the data stored thereon comprises a distributed computer system, in particular a blockchain-based system, in particular a distributed ledger, wherein the distributed computer system may be privately or publicly accessible.

12. Method according to claim 10 or 11, wherein the step of creating (V03) comprises a reduction of the number of hash values, in particular a recursive or successive reduction.

13. Method according to any one of claims 10 - 12, wherein in the step of reading out (V04) a reference master hash value (1707r-1, 1707r-2), a time stamp is additionally read out and/or the data elements comprise time stamps.

14. Method according to any one of claims 10 - 13, wherein the step of calculating (V02) a hash value is based on a structure comprising the data element and a further element, in particular a seed/salt.

15. **Method for systematically maintaining the integrity of a data structure (301)** and its verifiability, comprising a method for securing data according to any one of claims 1 - 5 to be carried out recurrently at regular or irregular intervals.

16. **Computer system,** in particular a distributed computer system, which is set up to perform
- a method for securing of data according to any one of claims 1-5,
- a method for deleting a data element according to any one of claims 6-9,
- a method for verifying data according to any one of claims 10- 14, and/or
- a method for systematically maintaining the integrity of a data structure and its verifiability according to claim 15.

17. **Computer program,** comprising:
- a method for creating and/or securing of data according to any one of claims 1-5,
- a method for deleting a data element according to any one of claims 6-9,
- a method of verifying data according to any one of claims 10- 14,
- a method for systematically maintaining the integrity of a data structure and its verifiability according to claim 15.

18. **Computer-readable medium** comprising computer-executable instructions suitable for enabling a computer to execute
- a method for creating and/or securing of data according to any one of claims 1-5,
- a method for deleting a data element according to any one of claims 6-9,
- a method for verifying data according to any one of claims 10 - 14,
- a method for systematically maintaining the integrity of a data structure and its verifiability according to claim 15.

## Revendications

1. **Procédé pour stocker ou sauvegarder des données d'une structure de données (301),** en utilisant un système qui garantit l'intégrité des données stockées sur celui-ci de manière algorithmique et/ou mathématique,
comprenant les étapes suivantes :
a) Sélectionner (S01) d'une première instance (700a), qui se trouve dans la structure de données (301) et comprend au moins un premier élément de données (703a, 703b), et sélectionner (S01) d'au moins une seconde instance (700b), qui se trouve dans la structure de données (301) et comprend au moins un second élément de données (703c),
b) pour chaque élément de données : déterminer (S02b-1) si l'élément de données a été supprimé dans le passé en le remplaçant par une valeur de hachage correspondant à l'élément de données selon le procédé de la revendication 6, si l'élément de données a été supprimé dans le passé par une valeur de hachage correspondant à l'élément de données : lire successivement (S02b-2) ladite valeur de hachage pour l'utiliser comme valeur de hachage unique ; calculer (S02a) une valeur de hachage unique (705a-c) sur la base de l'élément de données respectif (703a-c) à l'intérieur de l'instance correspondante ;
c) Générer (S03) au moins une valeur de hachage maître (706a, 706c, 707) basée sur les valeurs de hachage individuelles, grâce à quoi les valeurs de hachage individuelles calculées (S02a) et lues (S02b-2) sont combinées, et
d) Sauvegarder (S04) une valeur de hachage maître (706a, 706c, 707) dans un support ou un système (302), qui sécurise algorithmiquement et / ou mathématiquement l'intégrité des données qui y sont stockées.

2. Procédé selon la revendication 1, dans lequel l'étape de sauvegarde (S04) comprend la sauvegarde sur un système informatique distribué, avec un système basé sur une blockchain avec un registre distribué, dans lequel le système informatique distribué peut être privé ou accessible au public.

3. Procédé selon la revendication 1 ou 2, dans lequel l'étape de sélection (S01) comprend :
a) La détermination d'un intervalle de temps Δt à l'intérieur de la structure de données (301) et
b) Sélectionner la sélection des instances (700a, 700b) à l'intérieur de l'intervalle de temps Δt déterminé ;
et/ou
la sélection d'un nombre défini d'instances (700a, 700b).

4. Procédé selon l'une des revendications précédentes, dans lequel les éléments de données à l'intérieur d'une instance comprennent des horodatages.

5. Procédé selon l'une des revendications précédentes, dans lequel l'étape de calcul (S02) d'une valeur de hachage est réalisée sur la base d'une structure, qui comprend l'élément de données et un autre élément de données, en particulier une seed/salt.

6. **Procédé pour supprimer un élément de données d'une structure de données (1301, 1401),** qui a été stocké ou sauvegardé selon le procédé de la revendication 1, comprenant les étapes suivantes :
a) Calculer (L01) une valeur de hachage (1578) basée au moins sur l'élément de données à supprimer (1375) à l'intérieur d'une instance (700a, 700b), et
b) Remplacer (L02) l'élément de données (1375) dans la structure de données par la valeur de hachage calculée (1578).

7. Procédé selon la revendication 6, dans lequel le calcul (L01) de la valeur de hachage (1578) est basé sur une structure de données, qui comprend l'élément de données (1375) et un autre élément, en particulier un seed/salt (1376).

8. Procédé selon la revendication 6 ou 7, dans lequel le remplacement comprend un écrasement au moins partiel de l'élément de données d'origine dans la structure de données par la valeur de hachage calculée et/ou des zones de l'élément de données d'origine qui n'ont pas été écrasées par la valeur de hachage calculée sont écrasées par d'autres données, en particulier des données aléatoires (1577), notamment à plusieurs reprises.

9. Procédé selon l'une des revendications 6 - 8, dans lequel à l'étape (b), un second élément de données est calculé sur la base de la valeur de hachage calculée, qui est différente de l'élément de données à supprimer et l'élément de données à supprimer est remplacé par le second élément de données.

10. Procédé de vérification de données à l'intérieur d'une structure de données (1601), qui a été stockée ou sauvegardée selon le procédé de la revendication 1, comprenant les étapes suivantes :
a) Sélectionner (V01) une instance, qui comprend au moins un élément de données (1603a-d, 1703a-d), à partir d'une structure de données (1601, 1701),
b) Calculer (V02a) au moins une valeur de hachage unique (1605a-d, 1705a, 1705b, 1705d) sur la base d'un élément de données sélectionné ou lire (V02b) une valeur de hachage unique (1705c-1, 1705c), qui représente un élément de données supprimé (1703c-1, 1703c-2),
c) Générer (V03) au moins une valeur de hachage maître (1707) sur la base des valeurs de hachage individuelles, les valeurs de hachage individuelles calculées (V02a) et lues (V02b) pouvant également être combinées,
d) Lecture (V04) d'une valeur de hachage maître de référence (1707r-1, 1707r-2) à partir d'un support ou système (1702), qui garantit l'intégrité des données stockées sur celui-ci de manière algorithmique et/ou mathématique, ou à partir d'une copie de données sécurisées sur un tel support ou système,
e) Comparer (V05) la valeur de hachage maître générée (1707) avec la valeur de hachage maître de référence lue (1707r-2),
f) Déterminer (V06) un résultat concernant l'intégrité des données de l'instance sélectionnée, où,
si la comparaison de la valeur de hachage maître générée (1707) avec la valeur de hachage maître de référence lue (1707r-2) est positive, l'absence de manipulation des données est déterminée, où
si la comparaison de la valeur de hachage maître générée (1707) avec la valeur de hachage maître de référence lue (1707r-2) n'est pas positive, l'existence d'une manipulation des données est déterminée, le résultat pouvant notamment contenir des informations supplémentaires sur l'emplacement de la manipulation des données détectées.

11. Procédé selon la revendication 10, dans lequel le support ou système, qui assure l'intégrité des données stockées sur celui-ci de manière algorithmique et/ou mathématique, comprend un système informatique distribué, en particulier un système basé sur la blockchain, en particulier un registre distribué, où le système informatique distribué peut être privé ou accessible au public.

12. Procédé selon la revendication 10 ou 11, dans lequel l'étape de génération (V03) comprend une réduction du nombre de valeurs de hachage, notamment une réduction récursive ou successive.

13. Procédé selon l'une des revendications 10 - 12, dans lequel lors de l'étape de lecture (V04) d'une valeur de hachage maître de référence (1707r-1, 1707r-2), un horodatage est également lu en plus et/ou les éléments de données comprennent des horodatages.

14. Procédé selon l'une des revendications 10 - 13, dans lequel l'étape de calcul (V02) d'une valeur de hachage est basée sur une structure, qui comprend l'élément de données et un autre élément, en particulier un seed/salt.

15. **Procédé pour le maintien systématique de l'intégrité d'une structure de données (301)** et de sa vérifiabilité, qui comprend un procédé de sauvegarde des données selon l'une des revendications 1 - 5 qui doit être effectué à des intervalles de temps réguliers ou irréguliers.

16. **Système informatique,** en particulier système informatique distribué, qui est configuré pour
- exécuter un procédé de sécurisation des données selon l'une des revendications 1 - 5,
- exécuter un procédé pour supprimer un élément de données selon l'une des revendications 6 - 9,
- exécuter un procédé de vérification des données selon l'une des revendications 10 - 14, et/ou
- exécuter un procédé pour le maintien systématique de l'intégrité d'une structure de données et de sa vérifiabilité selon la revendication 15.

17. **Programme informatique,** comprenant :
- un procédé pour générer et/ou sauvegarder des données selon l'une des revendications 1-5,
- un procédé pour supprimer un élément de données selon l'une des revendications 6-9,
- un procédé pour vérifier des données selon l'une des revendications 10 - 14,
- un procédé pour le maintien systématique de l'intégrité d'une structure de données et de sa vérifiabilité selon la revendication 15.

18. **Support lisible par ordinateur,** comprenant des instructions exécutables par ordinateur, adaptées à une exécution sur un ordinateur
- un procédé pour générer et/ou sauvegarder des données selon l'une des revendications 1-5,
- un procédé pour supprimer un élément de données selon l'une des revendications 6-9,
- un procédé pour vérifier des données selon l'une des revendications 10 - 14,
- un procédé pour le maintien systématique de l'intégrité d'une structure de données et de sa vérifiabilité selon la revendication 15.
